# EUROPÄISCHE PATENTSCHRIFT

(11) **EP 2 796 952 B1**
(45) Veröffentlichungstag und Bekanntmachung des Hinweises auf die Patenterteilung: **20.01.2016**
(21) Anmeldenummer: 13165313.1
(22) Anmeldetag: 25.04.2013
(51) Int. Cl.: G05B 19/4068, G05B 19/4097

(54) **Numerische Steuerung mit Möglichkeit zur Änderung des Teileprogramms**
Numerical controller capable of changing the part program
Commande numérique avec possibilité de modification du programme des pièces

(43) Veröffentlichungstag der Anmeldung: 29.10.2014
(73) Patentinhaber: Siemens Aktiengesellschaft, 80333 München (DE)
(72) Erfinder: Sinn, Christof, 75417 Mühlacker (DE); Spielmann, Ralf, 70569 Stuttgart (DE)

(56) Entgegenhaltungen:
- EP-A1- 2 541 355
- WO-A1-03/056401
- DE-A1-102005 025 338

## Beschreibung

Die vorliegende Erfindung betrifft ein Betriebsverfahren für eine numerische Steuerung,
- wobei die numerische Steuerung Zugriff auf ein Teileprogramm hat, das von der numerischen Steuerung ausführbar ist,
- wobei von der numerischen Steuerung durch Ausführen des Teileprogramms eine Produktionsmaschine steuerbar ist,
- wobei der numerischen Steuerung von einem Bediener über eine Bedienerschnittstelle ein Auswahlbefehl vorgegeben wird, mittels dessen mindestens eine Programmanweisung einer Sequenz von Programmanweisungen des Teileprogramms selektiert wird.

Die vorliegende Erfindung betrifft weiterhin ein Computerprogramm, wobei das Computerprogramm Maschinencode umfasst, der von einer numerischen Steuerung unmittelbar ausführbar ist, wobei die Ausführung des Maschinencodes durch die numerische Steuerung bewirkt, dass die numerische Steuerung ein derartiges Betriebsverfahren ausführt.

Die vorliegende Erfindung betrifft weiterhin eine numerische Steuerung, in der ein von der numerischen Steuerung ausführbares derartiges Computerprogramm gespeichert ist.

Die oben genannten Gegenstände sind beispielsweise aus der DE 10 2005 025 338 A1 bekannt.

Numerische Steuerungen arbeiten im laufenden Betrieb üblicherweise ein sogenanntes Teileprogramm ab. Das Teileprogramm legt fest, auf welche Weise lage- und drehzahlgeregelte Achsen der Produktionsmaschine (insbesondere einer Werkzeugmaschine) gesteuert werden. Theoretisch ist es möglich, das Teileprogramm direkt über die Bedienerschnittstelle der numerischen Steuerung zu generieren. Über die Bedienerschnittstelle der numerischen Steuerung steht jedoch nur die Möglichkeit zur Verfügung, Steuerbefehle einzeln sequentiell abzusetzen. In der Praxis wird das Teileprogramm daher, ausgehend von mittels eines CAD-Systems generierten Daten, mittels eines CAM-Systems generiert. Das CAM-System kann einen sogenannten Postprozessor mit umfassen.

Beim Generieren des Teileprogramms wird mittels des CAM-Systems von einem Bediener des CAM-Systems eine Folge von Sequenzen von Programmanweisungen generiert. Für jede Sequenz von Programmanweisungen gibt der Bediener des CAM-Systems dem CAM-System eine parametrisierte Beschreibung der jeweiligen Bearbeitung vor. Beispielsweise kann beim Fräsen im Formenbau der Bediener des CAM-Systems für eine Schlichtoperation vorgegeben, welches Werkzeug verwendet werden soll, wie groß eine Zustelltiefe sein soll, was der Geometriebezug ist und dergleichen mehr. Auch kann er eine Bahn, entlang derer beispielsweise ein Fräser bewegt werden soll, vorgegeben. Anhand der parametrisierten Beschreibungen der Sequenzen von Programmanweisungen generiert das CAM-System sodann das Teileprogramm. Das Teileprogramm wird an die numerische Steuerung übertragen. Es enthält in der Regel nicht mehr die parametrisierten Beschreibungen als solche, sondern nur noch die Abfolge der einzelnen Steuerbefehle für die lage- und drehzahlgeregelten Achsen der Produktionsmaschine. Die Abfolge der einzelnen Steuerbefehle kann sehr lang sein (teilweise mehrere Millionen von Datensätzen). Die Kriterien, welche der Ermittlung der Abfolge der Steuerbefehle zu Grunde lagen, können der Abfolge der Steuerbefehle nicht mehr entnommen werden. Beispiele derartiger Kriterien sind der Zeilenabstand, die Werkzeuggeometrie, die Bearbeitungsstrategie, Auswirkungen von Kollisionsvermeidungsrechnungen, technologische Werte wie beispielsweise die Anstellung des Werkzeuges usw.

Wenn das Teileprogramm geändert werden soll, stellt eine direkte Änderung der Steuerbefehle als solcher keinen gangbaren Weg dar, da die der Abfolge von Steuerbefehlen zu Grunde liegenden Kriterien der Abfolge von Steuerbefehlen nicht mehr entnommen werden können. Es müssen vielmehr die parametrisierten Beschreibungen geändert werden, die den Sequenzen von Programmanweisungen zugrundeliegen.

Der Bediener des CAM-Systems ist in der Regel eine vom Bediener der numerischen Steuerung verschiedene Person. In manchen Fällen fehlen dem Bediener des CAM-Systems technische Kenndaten der Produktionsmaschine, die mittels des Teileprogramms gesteuert werden soll. Dies kann zur Folge haben, dass die Ausführung des Teileprogramms durch die numerische Steuerung zu nicht ordnungsgemäß hergestellten Werkstücken führt. Je nach Lage des Einzelfalls kann es in derartigen Fällen erforderlich sein, erneut grundlegend neu das Teileprogramm zu ermitteln. In vielen Fällen ist für den Bediener der numerischen Steuerung jedoch aufgrund seiner Kenntnis der Produktionsmaschine und deren technischer Kenndaten ersichtlich, welcher technologische Parameter welcher parametrisierten Beschreibung geändert werden muss, um ein ordnungsgemäßes Werkstück herstellen zu können.

Im Stand der Technik kann der Bediener der numerischen Steuerung Änderungen des Teileprogramms nur dann durchführen, wenn der zu ändernde Teil des Teileprogramms in der numerischen Steuerung in parametrisierter Form vorliegt. Dies ist in der Regel nur bei einem geringen Bruchteil des gesamten Teileprogramms der Fall. In allen anderen Fällen muss sich der Bediener der numerischen Steuerung mit dem Bediener des CAM-Systems in Verbindung setzen und diesem mitteilen, welche Parameter in welcher parametrisierten Beschreibung er geändert haben möchte. Der Bediener des CAM-Systems ruft daraufhin das CAM-System auf, ändert manuell die entsprechende parametrisierte Beschreibung und erstellt sodann das Teileprogramm neu. Das entsprechend modifizierte Teileprogramm wird - in der Regel als Ersatz für das ursprüngliche Teileprogramm - an die numerische Steuerung übertragen.

Es kann geschehen, dass auch das modifizierte Teileprogramm nicht zu dem gewünschten Ergebnis führt. In einem derartigen Fall muss die zuletzt erläuterte Vorgehensweise - unter Umständen mehrfach - wiederholt werden, bis das mittels des Teileprogramms hergestellte Werkstück ordnungsgemäß ist.

Aus der WO 03/056 401 A1 ist ein Betriebsverfahren für eine numerische Steuerung bekannt, wobei die numerische Steuerung Zugriff auf ein Teileprogramm hat, das von der numerischen Steuerung ausführbar ist. Durch Ausführen des Teileprogramms ist von der numerischen Steuerung eine Produktionsmaschine steuerbar. Der numerischen Steuerung kann von einem Bediener über eine Bedienerschnittstelle ein Auswahlbefehl vorgegeben werden. Mittels des Auswahlbefehls wird mindestens eine Programmanweisung einer Sequenz von Programmanweisungen des Teileprogramms selektiert. Die numerische Steuerung gibt eine parametrisierte Beschreibung der die mindestens eine selektierte Programmanweisung enthaltenden Sequenz von Programmanweisungenüber die Bedienerschnittstelle an den Bediener der numerischen Steuerung aus. Weiterhin nimmt die numerische Steuerung vom Bediener eine Änderung der parametrisierten Beschreibung entgegen. Bei der WO 03/056 401 A1 ist innerhalb der numerischen Steuerung eine Programmiereinrichtung implementiert, mittels derer die parametrisierte Beschreibung ermittelt wird und mittels derer anhand der geänderten parametrisierten Beschreibung ein entsprechend modifiziertes Teileprogramm ermittelt wird.

Die Aufgabe der vorliegenden Erfindung besteht darin, Möglichkeiten zu schaffen, mittels derer der Bediener der numerischen Steuerung selbst das CAM-generierte Teileprogramm ändern kann.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 8.

Erfindungsgemäß wird ein Betriebsverfahren der eingangs genannten Art dadurch ausgestaltet,
- dass die numerische Steuerung eine die mindestens eine selektierte Programmanweisung identifizierende Information über eine Rechner-Rechner-Verbindung direkt oder indirekt an ein CAM-System übermittelt, mittels dessen das Teileprogramm generiert wurde,
- dass die numerische Steuerung über die Rechner-Rechner-Verbindung von dem CAM-System eine parametrisierte Beschreibung der die mindestens eine selektierte Programmanweisung enthaltenden Sequenz von Programmanweisungen entgegennimmt,
- dass die numerische Steuerung die parametrisierte Beschreibung über die Bedienerschnittstelle an den Bediener der numerischen Steuerung ausgibt,
- dass die numerische Steuerung vom Bediener eine Änderung der parametrisierten Beschreibung entgegennimmt,
- dass die numerische Steuerung die geänderte parametrisierte Beschreibung an das CAM-System übermittelt und
- dass die numerische Steuerung vom CAM-System ein mit der geänderten parametrisierten Beschreibung korrespondierendes modifiziertes Teileprogramm entgegennimmt.

Dadurch wird es für den Bediener der numerischen Steuerung möglich, eine parametrisierte Beschreibung genau desjenigen Teils des Teileprogramms zu erhalten, das er ändern möchte.

In einer bevorzugten Ausgestaltung des erfindungsgemäßen Betriebsverfahrens ist vorgesehen,
- dass die numerische Steuerung von dem CAM-System zusammen mit der parametrisierten Beschreibung ein mit der parametrisierten Beschreibung korrespondierendes Bild einer durch Ausführen des Teileprogramms bewirkten Bearbeitung eines Werkstücks entgegennimmt und
- dass die numerische Steuerung das Bild über die Bedienerschnittstelle an den Bediener ausgibt.

Dadurch wird erreicht, dass dem Bediener zusätzlich zur parametrisierten Beschreibung als solcher auch eine grafische Darstellung der zugehörigen Bearbeitung zur Verfügung steht.

Vorzugsweise ist vorgesehen,
- dass die numerische Steuerung nach dem Übermitteln der geänderten parametrisierten Beschreibung von dem CAM-System zunächst ein mit der geänderten parametrisierten Beschreibung korrespondierendes Bild einer durch Ausführen des modifizierten Teileprogramms bewirkten Bearbeitung eines Werkstücks entgegennimmt,
- dass die numerische Steuerung das Bild über die Bedienerschnittstelle an den Bediener ausgibt und
- dass die numerische Steuerung das modifizierte Teileprogramm von dem CAM-System erst anfordert, nachdem sie vom Bediener eine Bestätigung des Bildes als ordnungsgemäß entgegengenommen hat.

Durch diese Vorgehensweise kann das Ausmaß der zu übertragenden Datenmengen minimiert werden.

Die erfindungsgemäße Vorgehensweise ist unabhängig davon ausführbar, welche Programmanweisung der Bediener selektiert. Sie ist also auch dann ausführbar, wenn der Bediener der numerischen Steuerung eine Programmanweisung einer Sequenz von Programmanweisungen selektiert, die in parametrisierter Form in der numerischen Steuerung hinterlegt ist. Ihre vollen Stärken zeigt die erfindungsgemäße Vorgehensweise jedoch in dem Fall, dass die Sequenz von Programmanweisungen weder im Teileprogramm noch in der numerischen Steuerung in parametrisierter Form vorliegt.

Es ist möglich, dass vom Bediener nur bestimmte Programmanweisungen oder bestimmte Gruppen aufeinander folgender Programmanweisungen selektierbar sind. Vorzugsweise jedoch ist vom Bediener eine beliebige Programmanweisung oder eine beliebige Gruppe aufeinander folgender Programmanweisungen der Sequenz von Programmanweisungen selektierbar.

Die vom Bediener selektierten Programmanweisungen können insbesondere mindestens eine Programmanweisung umfassen, aufgrund derer das Werkstück auf einer Fläche bearbeitet wird, die an mindestens einem Punkt der Fläche in zwei zueinander orthogonalen Richtungen gekrümmt ist.

In der Praxis umfasst ein Hauptprogramm des Teileprogramms oftmals Unterprogrammaufrufe. Die zugehörigen Unterprogramme können alternativ parametrisierte Programmanweisungen oder Freiformbearbeitungen sein. Die Selektion durch den Bediener der numerischen Steuerung kann derart ausgestaltet sein, dass der Bediener die mindestens eine Programmanweisung durch Selektieren eines der Unterprogrammaufrufe selektiert.

Für ein ordnungsgemäßes Funktionieren des erfindungsgemäßen Betriebsverfahrens ist es erforderlich, dass der numerischen Steuerung das CAM-System bekannt ist, mittels dessen das Teileprogramm generiert wurde. Es ist möglich, dass diese Information in der numerischen Steuerung fest hinterlegt ist oder dass die entsprechende Information vom Bediener des CAM-Sys¬tems abgefragt wird. Vorzugsweise ermittelt die numerische Steuerung jedoch das entsprechende CAM-System selbsttätig anhand eines Headers des Teileprogramms.

Die Aufgabe wird weiterhin durch ein Computerprogramm mit den Merkmalen des Anspruchs 9 gelöst. Erfindungsgemäß wird ein Computerprogramm der eingangs genannten Art dadurch ausgestaltet, dass die Ausführung des Maschinencodes durch die numerische Steuerung bewirkt, dass die numerische Steuerung ein erfindungsgemäßes Betriebsverfahren ausführt.

Die Aufgabe wird weiterhin gemäß Anspruch 10 durch eine numerische Steuerung gelöst, in der ein von der numerischen Steuerung ausführbares erfindungsgemäßes Computerprogramm gespeichert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Verbund mehrerer Einrichtungen,
- FIG 2: ein Hauptprogramm eines Teileprogramms,
- FIG 3: ein Unterprogramm eines Teileprogramms,
- FIG 4: eine Kommunikation des Verbundes von FIG 1,
- FIG 5: eine Ausgabemaske, und
- FIG 6: eine weitere Kommunikation des Verbundes von FIG 1.

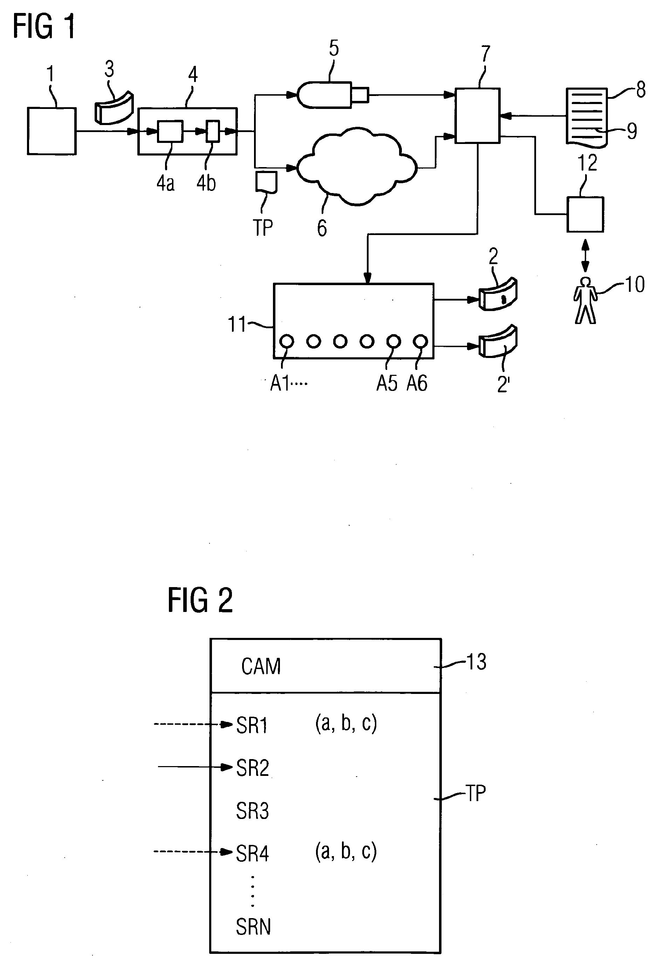

Nachstehend wird in Verbindung mit FIG 1 zunächst die typische Vorgehensweise des Standes der Technik erläutert, auf welcher die vorliegende Erfindung aufbaut.

Gemäß FIG 1 wird zunächst mittels eines CAD-Systems 1 ein herzustellendes Werkstück 2 spezifiziert. Eine (in der Regel rein geometrische) Beschreibung 3 des Werkstücks 2 wird an ein CAM-System 4 weitergegeben. Das CAM-System 4 umfasst in der Regel einen CAM-Prozessor 4a und einen Postprozessor 4b. Mittels des CAM-Systems 4 wird ein Teileprogramm TP generiert. Der CAM-Prozessor 4a ist für ein Verfahrensmuster zuständig. In der Regel erzeugt der CAM-Prozessor 4a anhand von parametrisierten Masken, die Flächen des Werkstücks 2 zugeordnet werden, eine Abfolge von Werkzeugbahnen. Die Werkzeugbahnen sind in der Regel noch steuerungsneutral definiert. Der Postprozessor 4b setzte die Werkzeugbahnen in eine steuerungsspezifische Folge (= das Teileprogramm TP) um. Das Teileprogramm TP wird - beispielsweise über einen Datenträger 5 oder eine Rechner-Rechner-Verbindung 6 - an eine numerische Steuerung 7 übertragen. Die numerische Steuerung 7 hat dadurch Zugriff auf das Teileprogramm TP. Die Darstellung des Datenträgers 5 als USB-Memorystick ist rein beispielhaft. Die Rechner-Rechner-Verbindung 6 kann - je nach Lage des Einzelfalls - als LAN, als WAN oder als WWW ausgebildet sein. Über die Rechner-Rechner-Verbindung 6 kann unter Umständen ein direkter Zugriff der numerischen Steuerung 7 auf das Teileprogramm TP des CAM-Systems 4 möglich sein.

Die numerische Steuerung 7 ist mit einem Computerprogramm 8 programmiert. Das Computerprogramm 8 ist in der numerischen Steuerung 7 intern gespeichert, beispielsweise in einem EEPROM oder in einem Flash-EPROM. Das Computerprogramm 8 umfasst Maschinencode 9, der von der numerischen Steuerung 7 unmittelbar ausführbar ist. Das Computerprogramm 8 wird in der Regel vom Hersteller der numerischen Steuerung 7 in der numerischen Steuerung 7 hinterlegt.

Die Ausführung des Maschinencodes 9 durch die numerische Steuerung 7 bewirkt zunächst, dass die numerische Steuerung 7 - nach Vorgabe eines entsprechenden Steuerbefehls durch einen Bediener 10 - das Teileprogramm TP ausführt. Durch Ausführen des Teileprogramms TP wird von der numerischen Steuerung 7 eine Produktionsmaschine 11 gesteuert. Die Produktionsmaschine 11 kann insbesondere als Werkzeugmaschine ausgebildet sein. Durch das Ausführen des Teileprogramms TP (und die entsprechende Steuerung der Produktionsmaschine 11) wird das Werkstück 2 hergestellt.

Ein Hauptprogramm des Teileprogramms TP umfasst gemäß FIG 2 in der Regel Unterprogrammaufrufe SR1, SR2, ... SRN. Es kann sogar ausschließlich aus einer Sequenz von Unterprogrammaufrufen SR1, SR2, ... SRN bestehen.

Einige der Unterprogrammaufrufe SR1, SR2, ... SRN - gemäß FIG 2 die Unterprogrammaufrufe SR1 und SR4 - sind parametrisiert. In einem derartigen Fall ist das zugehörige Unterprogramm unabhängig vom Teileprogramm TP in der numerischen Steuerung 7 hinterlegt. Mittels des zugehörigen Unterprogramms wird der entsprechende Unterprogrammaufruf SR1, SR4 innerhalb der numerischen Steuerung 7 in eine Folge von einzelnen Verfahrbewegungen lagegeregelter Achsen A1 bis A5 der Produktionsmaschine 11 umgesetzt. Die numerische Steuerung 7 berücksichtigt bei der Umsetzung in die Verfahrbewegungen der lagegeregelten Achsen A1 bis A5 die Parameter a, b, c des entsprechenden Unterprogrammaufrufs SR1, SR4. Diese Teile des Teileprogramms TP können der numerischen Steuerung 7 daher in parametrisierter Form vorgegeben sein.

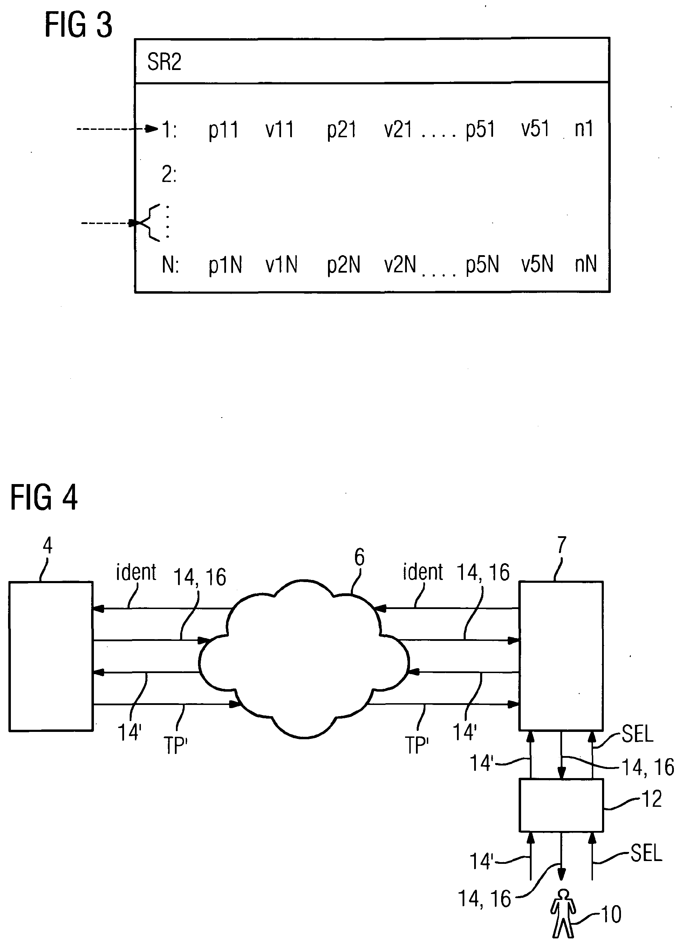

Andere der Unterprogrammaufrufe SR1, SR2, ... SRN - gemäß FIG 2 die Unterprogrammaufrufe SR2 und SR3 - sind nicht parametrisiert. In diesem Fall sind die zugehörigen Unterprogramme Bestandteil des Teileprogramms TP. Sie bestehen gemäß FIG 3 in der Regel aus einer (sehr langen) Abfolge einzelner Verfahrbewegungen der lagegeregelten Achsen A1 bis A5. Für jede einzelne Verfahrbewegung ist für jede lagegeregelte Achse A1 bis A5 ist ein jeweiliger Positionswert p11 bis p51, p1N bis p5N vorgegeben. Weiterhin kann für jede lagegeregelte Achse A1 bis A5 ein jeweiliger Geschwindigkeitswert v11 bis v51, v1N bis v5N vorgegeben sein. Oftmals sind jedoch einige wenige übergreifende Geschwindigkeiten vorgegeben - manchmal sogar nur eine einzige Geschwindigkeit -, anhand derer die numerische Steuerung 7 die Geschwindigkeitswerte der Achsen A1 bis A5 für die jeweilige Position p11 bis p51, p1N bis p5N selbsttätig ermittelt. Weiterhin ist meist für mindestens eine drehzahlgeregelte Achse A6 eine Drehzahl n1 bis nN vorgegeben.

Es ist möglich, dass die nicht parametrisierten Unterprogrammaufrufe SR2, SR3 als solche entfallen und stattdessen die Abfolgen der einzelnen Verfahrbewegungen der lagegeregelten Achsen A1 bis A5 und gegebenenfalls auch die Drehzahlen n1 bis nN der drehzahlgeregelten Achse A6 im Hauptprogramm des Teileprogramms TP enthalten sind.

Das Computerprogramm 8, mit dem die numerische Steuerung 7 programmiert ist, bewirkt über die Ausführung des Teileprogramms TP hinaus, dass der Bediener 10 über eine Bedienerschnittstelle 12 mit der numerischen Steuerung 7 kommunizieren kann und die numerische Steuerung 7 hierauf aufbauende Tätigkeiten ausführt. Das entsprechende Betriebsverfahren, das Gegenstand der vorliegenden Erfindung ist, wird nachfolgend in Verbindung mit FIG 4 näher erläutert.

Gemäß FIG 4 kann der Bediener 10 der numerischen Steuerung 7 über die Bedienerschnittstelle 12 einen Auswahlbefehl SEL vorgegeben. Mittels des Auswahlbefehls SEL wird mindestens eine Programmanweisung einer Sequenz von Programmanweisungen des Teileprogramms TP selektiert. Beispielsweise kann der Bediener 10, wie in FIG 2 durch gestrichelte Pfeile angedeutet ist, einen Unterprogrammaufruf SR1, SR4 selektieren, welcher der numerischen Steuerung 7 in parametrisierter Form vorgegeben ist, dessen zugehöriges Unterprogramm also unabhängig vom Teileprogramm TP in der numerischen Steuerung 7 hinterlegt ist. Alternativ kann der Bediener 10, wie in FIG 3 durch gestrichelte Pfeile angedeutet ist, mittels des Auswahlbefehls SEL eine einzelne Programmanweisung einer Sequenz von Programmanweisungen oder eine Gruppe aufeinander folgender Programmanweisungen der Sequenz von Programmanweisungen selektieren. Beispielsweise kann der Bediener 10 im letztgenannten Fall die erste und die letzte Programmanweisung der zu selektierenden Gruppe anwählen. Die zugehörige Sequenz von Programmanweisungen liegt vorzugsweise weder im Teileprogramm TP noch in der numerischen Steuerung 7 in parametrisierter Form vor. Wiederum alternativ kann der Bediener 10, wie in FIG 2 durch einen durchgezogenen Pfeil angedeutet ist, mittels des Auswahlbefehls SEL einen Unterprogrammaufruf SR2 selektieren, der weder in der numerischen Steuerung 7 noch im Teileprogramm TP in parametrisierter Form vorliegt. In diesem Fall wird durch den Auswahlbefehl SEL (indirekt) die gesamte Abfolge von Verfahrbewegungen des entsprechenden Unterprogramms selektiert.

Es ist möglich, dass das nachfolgend weiter erläuterte Betriebsverfahren nur dann ausgeführt wird, wenn der Bediener 10 bestimmte Programmanweisungen selektiert. Vorzugsweise wird das nachfolgend weiter erläuterte Betriebsverfahren jedoch stets ausgeführt, also unabhängig davon, welche Programmanweisung oder welche Programmanweisungen der Bediener 10 selektiert. Der Bediener 10 kann also, soweit es das erfindungsgemäße Betriebsverfahren betrifft, vorzugsweise eine beliebige Programmanweisung oder eine beliebige Gruppe aufeinander folgender Programmanweisungen der Sequenz von Programmanweisungen selektieren. Insbesondere können die vom Bediener 10 selektierten Programmanweisungen mindestens eine Programmanweisung umfassen, aufgrund derer das Werkstück 2 auf einer Fläche bearbeitet wird, die an mindestens einem Punkt der Fläche in zwei zueinander orthogonalen Richtungen gekrümmt ist. Dies gilt unabhängig davon, wie die beiden zueinander orthogonalen Richtungen gewählt sind. Anders ausgedrückt: Es existiert an dem entsprechenden Punkt der Fläche keine Richtung, in der die Fläche nicht gekrümmt ist.

Der numerischen Steuerung 7 ist bekannt, mittels welchen CAM-Systems 4 das Teileprogramm TP generiert wurde. Beispielsweise kann der numerischen Steuerung 7 vom Bediener 10 eine entsprechende Information vorgegeben werden. Auch kann die entsprechende Information fest in der numerischen Steuerung 7 hinterlegt sein. Vorzugsweise jedoch enthält das Teileprogramm TP gemäß FIG 2 einen Header 13, in dem die entsprechende Information hinterlegt ist. In diesem Fall kann die numerische Steuerung 7 das zugehörige CAM-System 4 anhand des Headers 13 selbsttätig ermitteln. Die Information als solche kann beliebiger Natur sein. Beispielsweise kann sie in Form einer URL (universal resource locator) hinterlegt sein.

Aufgrund des Auswahlbefehls SEL übermittelt die numerische Steuerung 7 gemäß FIG 4 über die Rechner-Rechner-Verbindung 6 direkt oder indirekt eine Information ident an das CAM-System 4. Die Identifikation ident identifiziert die mindestens eine selektierte Programmanweisung. Beispielsweise kann die entsprechende Information ident die Zeilennummer des Hauptprogramms des Teileprogramms TP oder eine Kennzeichnung des entsprechenden Unterprogramms und dort die Zeilennummer umfassen.

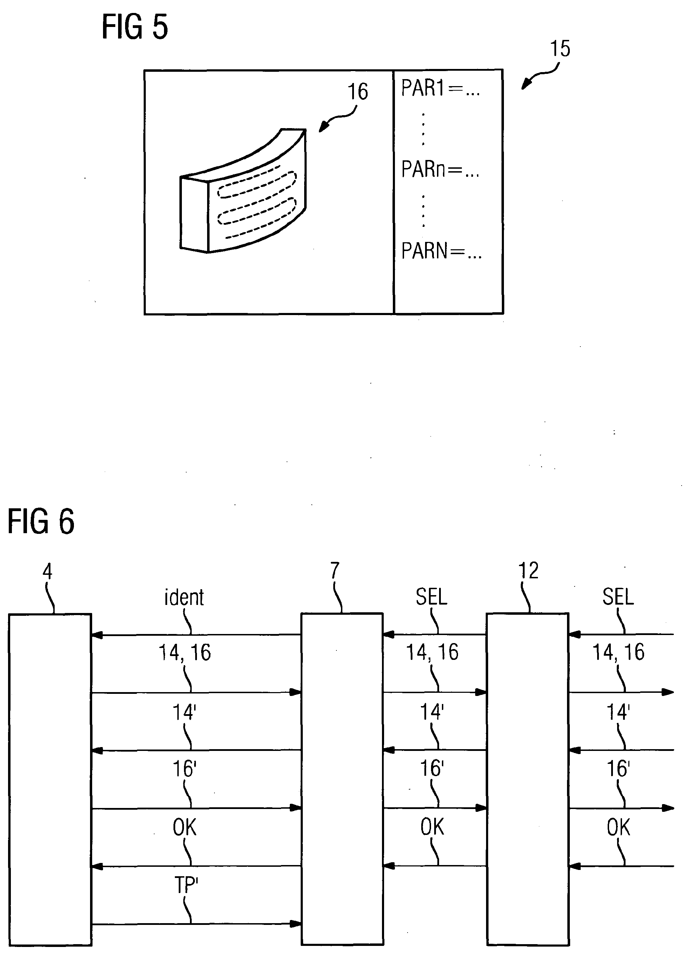

Die Information ident wird vom CAM-System 4 automatisiert verarbeitet. Insbesondere ermittelt das CAM-System 4 die zugehörige parametrisierte Beschreibung 14 der die mindestens eine selektierte Programmanweisung enthaltenden Sequenz von Programmanweisungen. Die parametrisierte Beschreibung 14 übermittelt das CAM-System 4 über die Rechner-Rechner-Verbindung 6 an die numerische Steuerung 7. Die numerische Steuerung 7 nimmt die parametrisierte Beschreibung 14 entgegen. Weiterhin gibt die numerische Steuerung 7 die parametrisierte Beschreibung 14 über die Bedienerschnittstelle 12 an den Bediener 10 aus. FIG 5 zeigt die entsprechende Darstellung in einer Ausgabemaske 15.

Die parametrisierte Beschreibung 14 enthält eine Anzahl von Parametern PAR1 bis PARN. Die Parameter PAR1 bis PARN können vom Bediener 10 geändert werden. Wenn nun der Bediener 10 einen der Parameter PAR1 bis PARN - beispielsweise den Parameter PARn - ändert, nimmt die numerische Steuerung 7 die Änderung entgegen. Sie übermittelt (nach Vorgabe einer entsprechenden Anforderung durch den Bediener 10) die geänderte parametrisierte Beschreibung 14' bzw. zumindest die Änderungen - beispielsweise den geänderten Parameter PARn (oder alle Parameter PAR1 bis PARN einschließlich des geänderten Parameters PARn) - über die Rechner-Rechner-Verbindung 6 an das CAM-System 4. Das CAM-System 4 ermittelt daraufhin ein modifiziertes Teileprogramm TP'. Das modifizierte Teileprogramm TP' korrespondiert mit der vom Bediener 10 geänderten parametrisierten Beschreibung 14'. Das modifizierte Teileprogramm TP' wird vom CAM-System 4 automatisch an die numerische Steuerung 7 übermittelt. Die numerische Steuerung 7 nimmt das modifizierte Teileprogramm TP' entgegen. Der Bediener 10 ist dadurch in der Lage, nachfolgend anstelle des ursprünglichen Teileprogramms TP das modifizierte Teileprogramm TP' aufzurufen und von der numerischen Steuerung 7 ausführen zu lassen.

Das vorstehend erläuterte Grundprinzip der vorliegenden Erfindung kann auf verschiedene Weise modifiziert werden.

So ist es beispielsweise möglich, dass das CAM-System 4 zusammen mit der parametrisierten Beschreibung 14 ein Bild 16 an die numerische Steuerung 7 übermittelt. Das Bild 16 korrespondiert mit einer durch Ausführen des Teileprogramms TP bewirkten Bearbeitung des Werkstücks 2. Insbesondere zeigt das Bild 16 den Bearbeitungsvorgang als solchen, beispielsweise die von einem Bearbeitungswerkzeug abgefahrene Bahn oder andere Parameter wie beispielsweise einen Anstellwinkel. Das Bild 16 ist realistisch in dem Sinne, dass dargestellte Maße und Winkel realitätsgetreu sind. Die numerische Steuerung 7 nimmt das Bild 16 entgegen und gibt es über die Bedienerschnittstelle 12 an den Bediener 10 aus (siehe FIG 5).

Weiterhin wird dem Bediener 10 zumindest optional die Möglichkeit geboten, nicht sofort das modifizierte Teileprogramm TP' anzufordern, sondern zunächst nur eine Art Vorschau vorzunehmen. In diesem Fall übermittelt die numerische Steuerung 7 gemäß FIG 6 - wie zuvor - die geänderte parametrisierte Beschreibung 14' an das CAM-System 4. Das CAM-System 4 ermittelt daraufhin jedoch zunächst ein Bild 16'. Das Bild 16' zeigt - ebenso wie das Bild 16 - realitätsgetreu eine Bearbeitung eines Werkstücks 2'. Das Bild 16' basiert jedoch auf dem modifizierten Teileprogramm TP'. Es korrespondiert also mit der geänderten parametrisierten Beschreibung. Im übrigen entspricht es dem Bild 16. Das Bild 16' wird vom CAM-System 4 an die numerische Steuerung 7 übermittelt, welche es entgegennimmt und über die Bedienerschnittstelle 12 an den Bediener 10 ausgibt. Das modifizierte Teileprogramm TP' hingegen wird zu diesem Zeitpunkt noch nicht an die numerische Steuerung 7 übermittelt. Das modifizierte Teileprogramm TP' wird von der numerischen Steuerung 7 erst dann vom CAM-System 4 angefordert, wenn die numerische Steuerung 7 vom Bediener 10 eine Bestätigung OK des Bildes 16' und damit auch der geänderten parametrisierten Beschreibung 14' als ordnungsgemäß entgegengenommen hat.

Die vorliegende Erfindung weist viele Vorteile auf. Insbesondere ist es für den Bediener 10 der numerischen Steuerung 7 (bzw. der Produktionsmaschine 11) auf einfache Weise möglich, ein Teileprogramm TP nach Bedarf zu modifizieren, wenn sich bei der Herstellung des Werkstücks 2 vor Ort Probleme ergeben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine numerische Steuerung (7),
- wobei die numerische Steuerung (7) Zugriff auf ein Teileprogramm (TP) hat, das von der numerischen Steuerung (7) ausführbar ist,
- wobei von der numerischen Steuerung (7) durch Ausführen des Teileprogramms (TP) eine Produktionsmaschine (11) steuerbar ist,
- wobei der numerischen Steuerung (7) von einem Bediener (10) über eine Bedienerschnittstelle (12) ein Auswahlbefehl (SEL) vorgegeben wird, mittels dessen mindestens eine Programmanweisung einer Sequenz von Programmanweisungen des Teileprogramms (TP) selektiert wird,
- wobei die numerische Steuerung (7) eine die mindestens eine selektierte Programmanweisung identifizierende Information (ident) über eine Rechner-Rechner-Verbindung (6) direkt oder indirekt an ein CAM-System (4) übermittelt, mittels dessen das Teileprogramm (TP) generiert wurde,
- wobei die numerische Steuerung (7) über die Rechner-Rechner-Verbindung (6) von dem CAM-System (4) eine parametrisierte Beschreibung (14) der die mindestens eine selektierte Programmanweisung enthaltenden Sequenz von Programmanweisungen entgegennimmt,
- wobei die numerische Steuerung (7) die parametrisierte Beschreibung (14) über die Bedienerschnittstelle (12) an den Bediener (10) der numerischen Steuerung (7) ausgibt,
- wobei die numerische Steuerung (7) vom Bediener (10) eine Änderung der parametrisierten Beschreibung (14) entgegennimmt,
- wobei die numerische Steuerung (7) die geänderte parametrisierte Beschreibung (14') an das CAM-System (4) übermittelt und
- wobei die numerische Steuerung (7) vom CAM-System (4) ein mit der geänderten parametrisierten Beschreibung (14') korrespondierendes modifiziertes Teileprogramm (TP') entgegennimmt.

2. Betriebsverfahren nach Anspruch 1,
**dadurch gekennzeichnet,**
- **dass** die numerische Steuerung (7) von dem CAM-System (4) zusammen mit der parametrisierten Beschreibung (14) ein mit der parametrisierten Beschreibung (14) korrespondierendes Bild (16) einer durch Ausführen des Teileprogramms (TP) bewirkten Bearbeitung eines Werkstücks (2) entgegennimmt und
- **dass** die numerische Steuerung (7) das Bild (16) über die Bedienerschnittstelle (12) an den Bediener (10) ausgibt.

3. Betriebsverfahren nach Anspruch 1 oder 2,
**dadurch gekennzeichnet,**
- **dass** die numerische Steuerung (7) nach dem Übermitteln der geänderten parametrisierten Beschreibung (14') von dem CAM-System (4) zunächst ein mit der geänderten parametrisierten Beschreibung (14') korrespondierendes Bild (16') einer durch Ausführen des modifizierten Teileprogramms (TP') bewirkten Bearbeitung eines Werkstücks (2') entgegennimmt,
- **dass** die numerische Steuerung (7) das Bild (16') über die Bedienerschnittstelle (12) an den Bediener (10) ausgibt und
- **dass** die numerische Steuerung (7) das modifizierte Teileprogramm (TP') von dem CAM-System (4) erst anfordert, nachdem sie vom Bediener (10) eine Bestätigung (OK) des Bildes (16') als ordnungsgemäß entgegengenommen hat.

4. Betriebsverfahren nach Anspruch 1, 2 oder 3, **dadurch gekennzeichnet, dass** die Sequenz von Programmanweisungen weder im Teileprogramm (TP) noch in der numerischen Steuerung (7) in parametrisierter Form vorliegt.

5. Betriebsverfahren nach einem der obigen Ansprüche, **dadurch gekennzeichnet, dass** vom Bediener (10) eine beliebige Programmanweisung oder eine beliebige Gruppe aufeinander folgender Programmanweisungen der Sequenz von Programmanweisungen selektierbar ist.

6. Betriebsverfahren nach einem der obigen Ansprüche, **dadurch gekennzeichnet, dass** die vom Bediener (10) selektierten Programmanweisungen mindestens eine Programmanweisung umfassen, aufgrund derer das Werkstück (2) auf einer Fläche bearbeitet wird, die an mindestens einem Punkt der Fläche in zwei zueinander orthogonalen Richtungen gekrümmt ist.

7. Betriebsverfahren nach einem der obigen Ansprüche, **dadurch gekennzeichnet, dass** ein Hauptprogramm des Teileprogramms (TP) Unterprogrammaufrufe (SR1 bis SRN) umfasst und dass der Bediener (10) die mindestens eine Programmanweisung durch Selektieren eines der Unterprogrammaufrufe (SR1 bis SRN) selektiert.

8. Betriebsverfahren nach einem der obigen Ansprüche, **dadurch gekennzeichnet, dass** die numerische Steuerung (7) das CAM-System (4), mittels dessen das Teileprogramm (TP) generiert wurde, selbsttätig anhand eines Headers (13) des Teileprogramms (TP) ermittelt.

9. Computerprogramm, wobei das Computerprogramm Maschinencode (9) umfasst, der von einer numerischen Steuerung (7) unmittelbar ausführbar ist, wobei die Ausführung des Maschinencodes (9) durch die numerische Steuerung (7) bewirkt, dass die numerische Steuerung (7) ein Betriebsverfahren nach einem der obigen Ansprüche ausführt.

10. Numerische Steuerung, in der ein von der numerischen Steuerung ausführbares Computerprogramm (8) nach Anspruch 9 gespeichert ist.

## Claims

1. Operating method for a numerical control unit (7),
- wherein the numerical control unit (7) has access to a subprogram (TP) which can be executed by the numerical control unit (7),
- wherein a production machine (11) can be controlled by the numerical control unit (7) by executing the sub-program (TP),
- wherein a selection command (SEL) is predetermined to the numerical control unit (7) by a user (10) by way of a user interface (12), by means of which at least one program instruction of a sequence of program instructions of the subprogram (TP) is selected,
- wherein the numerical control unit (7) conveys an item of information (ident) identifying the at least one selected program instruction via a computer-computer connection (6) directly or indirectly to a CAM system (4), by means of which the sub-program (TP) was generated,
- wherein the numerical control unit (7) accepts a parameterised description (14) of the sequence of program instructions containing the at least one selected program instruction via the computer-computer connection (6) from the CAM system (4),
- wherein the numerical control unit (7) outputs the parameterised description (14) via the user interface (12) to the user (10) of the numerical control unit (7),
- wherein the numerical control unit (7) accepts a change in the parameterised description (14) from the user (10),
- wherein the numerical control unit (7) transmits the modified parameterised description (14') to the CAM system (4) and
- wherein the numerical control unit (7) accepts a modified sub-program (TP') which corresponds to the modified parameterised description (14') from the CAM system (4).

2. Operating method according to claim 1,
**characterised in that**
- the numerical control unit (7) accepts an image (16) of a processing of a workpiece (2) performed by executing the sub-program (TP) and corresponding to the parameterised description (14) from the CAM system (4) together with the parameterised description (14) and
- the numerical control unit (7) outputs the image (16) via the user interface (12) to the user (10).

3. Operating method according to claim 1 or 2,
**characterised in that**
- after transmitting the modified parameterised description (14') from the CAM system (4) the numerical control unit (7) firstly accepts an image (16') of a processing of a workpiece (2') performed by executing the modified subprogram (TP'), said image corresponding to the modified parameterised description (14'),
- the numerical control unit (7) outputs the image (16') via the user interface (12) to the user (10) and
- the numerical control unit (7) firstly requests the modified sub-program (TP') from the CAM system (4), once it has accepted a confirmation (OK) of the image (16') as correct from the user (10).

4. Operating method according to claim 1, 2 or 3, **characterised in that**
the sequence of program instructions is neither present in parameterised form in the sub-program (TP) nor in the numerical control unit (7).

5. Operating method according to one of the above claims,
**characterised in that**
any program instruction or any group of consecutive program instructions of the sequence of program instructions can be selected by the user (10).

6. Operating method according to one of the above claims,
**characterised in that**
the program instructions selected by the user (10) comprise at least one program instruction, on the basis of which the workpiece (2) is processed on a surface which is curved in two respectively orthogonal directions at at least one point of the surface.

7. Operating method according to one of the above claims, **characterised in that** a main program of the sub-program (TP) comprises sub-program calls (SR1 to SRN) and the user (10) selects the at least one program instruction by selecting one of the subprogram calls (SR1 to SRN).

8. Operating method according to one of the above claims, **characterised in that** the numerical control unit (7) determines the CAM system (4) by means of which the subprogram (TP) was generated, automatically on the basis of a header (13) of the sub-program (TP).

9. Computer program, wherein the computer program comprises machine code (9), which can immediately be executed by a numerical control unit (7), wherein the execution of the machine code (9) by the numerical control unit (7) means that the numerical control unit (7) executes an operating method according to one of the above claims.

10. Numerical control unit, in which a computer program (8) according to claim 9 which can be executed by the numerical control unit is stored.

## Revendications

1. Procédé pour faire fonctionner une commande (7) numérique,
- dans lequel la commande (7) numérique a accès à un programme pièces (TP) qui peut être réalisé par la commande (7) numérique,
- dans lequel une machine (11) de production peut être commandée par la commande (7) numérique pour exécuter le programme pièces (TP),
- dans lequel un utilisateur (10) prescrit, à la commande (7) numérique par une interface (12) utilisateur, un ordre (SEL) de sélection au moyen duquel au moins une instruction d'une séquence d'instructions du programme pièces (TP) est sélectionnée,
- dans lequel la commande (7) numérique transmet une information (ident) identifiant la au moins une instruction de programme sélectionnée par une liaison (6) ordinateur-ordinateur directement ou indirectement à un système CAM (4) au moyen duquel le programme pièces (TP) a été créé,
- dans lequel la commande (7) numérique reçoit par la liaison (6) ordinateur-ordinateur du système CAM (4) une description (14) paramétrée de la séquence d'instructions de programme contenant la au moins une instruction de programme sélectionnée,
- dans lequel la commande (7) numérique envoie la description (14) paramétrée par l'interface (12) utilisateur à l'utilisateur (10) de la commande (7) numérique,
- dans lequel la commande (7) numérique reçoit de l'utilisateur (10) une modification de la description (14) paramétrée,
- dans lequel la commande (7) numérique transmet la description (14') paramétrée modifiée au système CAM (4) et
- dans lequel la commande (7) numérique reçoit du système CAM (4) un programme pièces (TP') modifié correspondant à la description (14') paramétrée et modifiée.

2. Procédé suivant la revendication 1,
**caractérisé**
- **en ce que** la commande (7) numérique reçoit du système CAM (4) ensemble avec la description (14) paramétrée une image (16), correspondant à la description (14) paramétrée, d'un usinage d'une pièce (2) provoqué par l'exécution du programme pièces (TP) et
- **en ce que** la commande (7) numérique envoie l'image (16) à l'utilisateur (10) par l'intermédiaire de l'interface utilisateur (12).

3. Procédé suivant la revendication 1 ou 2,
**caractérisé**
- **en ce que** la commande (7) numérique reçoit, après la transmission de la description (14') paramétrée modifiée du système CAM (4), d'abord une image (16'), correspondant à la description (14') paramétrée modifiée, d'un usinage d'une pièce (2') provoquée par l'exécution du programme pièce (TP') modifiée,
- **en ce que** la commande (7) numérique envoie l'image (16') à l'utilisateur (10) par l'interface utilisateur (12) et
- **en ce que** la commande (7) numérique n'exige le programme pièces (TP') modifié du système CAM (4) qu'après avoir dûment reçu de l'utilisateur (10) une confirmation (OK) de l'image (16').

4. Procédé suivant la revendication 1, 2 ou 3,
**caractérisé en ce que** la séquence d'instructions de programme ne se trouve sous forme paramétrée ni dans le programme pièces (TP), ni dans la commande (7) numérique.

5. Procédé suivant l'une des revendications précédentes, **caractérisé en ce qu'**une instruction de programme quelconque ou un groupe quelconque d'instructions de programme successives de la séquence d'instructions de programme peut être sélectionné par l'utilisateur (10).

6. Procédé suivant l'une des revendications précédentes, **caractérisé en ce que** les instructions de programme sélectionnées par l'utilisateur (10) comprennent au moins une instruction de programme, sur la base de laquelle la pièce (2) est usinée sur une surface qui est incurvée dans deux directions orthogonales l'une par rapport à l'autre en au moins un point de la surface.

7. Procédé suivant l'une des revendications précédentes, **caractérisé en ce qu'**un programme principal du programme pièces (TP) comprend des appels (SR1 à SRN) de sous-programme et **en ce que** l'utilisateur (10) sélectionne la au moins une instruction de programme en sélectionnant l'un des appels (SR1 à SRN) de sous-programme.

8. Procédé suivant l'une des revendications précédentes, **caractérisé en ce que** la commande (7) numérique détermine automatiquement au moyen d'une entête (13) du sous-programme (TP) le système CAM (4) au moyen duquel le programme pièces (TP) a été créé.

9. Programme d'ordinateur dans lequel le programme d'ordinateur comprend un code machine (9) qui peut être exécuté directement par une commande (7) numérique, l'exécution du code machine (9) par la commande (7) numérique faisant que la commande (7) numérique effectue un procédé suivant l'une des revendications précédentes.

10. Commande numérique dans laquelle est mémorisé un programme (8) d'ordinateur suivant la revendication 9 pouvant être réalisé par la commande numérique.
